Europäisches Patentamt

European Patent Office

Office européen des brevets

(11) Numéro de publication: **0 052 035**
**B1**

(12) **FASCICULE DE BREVET EUROPEEN**

(45) Date de publication du fascicule du brevet: **24.07.85**

(51) Int. Cl.⁴: **G 06 F 13/36**

(21) Numéro de dépôt: **81401647.3**

(22) Date de dépôt: **20.10.81**

(54) Dispositif d'arbitration décentralisée de plusieurs unités de traitement d'un système multiprocesseur.

(30) Priorité: **07.11.80 FR 8023877**

(43) Date de publication de la demande:
**19.05.82 Bulletin 82/20**

(45) Mention de la délivrance du brevet:
**24.07.85 Bulletin 85/30**

(84) Etats contractants désignés:
**DE GB IT SE**

(56) Documents cités:
**EP-A-0 011 701**
**EP-A-0 044 765**
**US-A-3 633 163**
**US-A-4 096 569**

**IBM TECHNICAL DISCLOSURE BULLETIN,
volume 22, no. 12, mai 1980 NEW YORK (US)
F.E. STRIETELMEIER "Arbitration array for
device connection to I/O channels", pages
5237-5238
COMPUTER DESIGN, avril 1978 CONCORD
(US) K.S. HOJBERG "One step programmable
arbiters for multiprocessors", pages 154-156,
158**

(73) Titulaire: **THOMSON-CSF TELEPHONE
146, Boulevard de Valmy
F-92707 Colombes (FR)**

(72) Inventeur: **Nicolas, Alain
THOMSON-CSF SCPI 173 Bld. Haussmann
F-75360 Paris Cedex 08 (FR)**
Inventeur: **Chapelain, Jean
THOMSON-CSF SCPI 173 Bld. Haussmann
F-75360 Paris Cedex 08 (FR)**

(74) Mandataire: **Weinmiller, Jürgen et al
Zeppelinstrasse 63
D-8000 München 80 (DE)**

Courier Press, Leamington Spa, England.

EP 0 052 035 B1

## Description

La présente invention se rapporte à un dispositif d'arbitration décentralisée de plusieurs unités de traitement d'un système multiprocesseur.

On connaît d'après l'article des pages 154 à 158 du numéro d'avril 1978 de la revue "Computer Design" un procédé d'arbitration et un dispositif d'arbitration pour un système multiprocesseur comportant plusieurs unités de traitement identiques toutes reliées au même bus. Cet arbitreur connu, du type synchrone, permet d'établir une priorité tournante entre les différentes unités de traitement afin qu'aucune d'entre elles ne monopolise le bus, et afin que le traitement réalisé par le système multiprocesseur soit le plus rapide possible. L'arbitreur connu comporte essentiellement une mémoire morte dans laquelle sont programées toutes les configurations possibles de demandes de réservation du bus et d'états correspondants.

Ce dispositif connu nécesite un grand nombre de fils de liaison entre le dispositif arbitreur et les différentes unités de traitement, ce qui peut être gênant lorsque le nombre d'unités de traitement est élevé.

De plus, la taille de la mémoire morte utilisée dans l'arbitreur connu est fonction du nombre d'unités de traitement coopérant avec elle. Si le nombre d'unités de traitement est peu élevé, la capacité de la mémoire morte nécessaire pour réaliser l'arbitreur est corrélativement faible, et l'arbitreur est donc peu onéreux et facile à réaliser. Par contre, si le nombre d'unités de traitement est élevé, il faut utiliser plusieurs mémoires de grande capacité, et la réalisation de l'arbitreur devient complexe et onéreuse.

On connaît d'après le document EP—A—44765 (Thomson—CSF Telephone); publié le 27.01.82, un dispositif d'arbitration décentralisée à plusieurs niveaux comprenant, pour chaque unité de traitement, une unité d'arbitration qui comporte: un arbitreur de détermination de priorité individuelle, dont les entrées sont reliées aux conducteurs de demandes individuelles de priorité dans un niveau; un arbitreur de détermination de priorité de niveau, dont les entrées sont reliées aux conducteurs de demandes de priorité de niveau; et un dispositif de signalisation de demande.

On connaît d'autre d'après le document Fall Joint Computer Conference, 1972, pages 719 à 740, et en particulier d'après la figure 12 et les explications correspondantes de la page 724, dernier alinéa, à la page 725, un systèmé d'arbitration décentralisée comportant des unités d'arbitration associées à chaque unité de traitement, et si l'ordre des priorités est fixe, toutes les unités d'arbitration ne sont pas reliées aux lignes de demande de priorité.

La présente invention a pour objet un dispositif d'arbitration décentralisée ne présentant pas les inconvénients des dispositifs connus, dispositif qui soit facile à réaliser et peu onéreux.

Le dispositif d'arbitration décentralisée conforme à la revendication 1 s'applique à p.n unités de traitement toutes reliés à un bus commun et réparties en $p$ niveaux comprenant chacun $n$ unités de traitement associés chacune à une unité d'arbitration et chaque unité d'arbitration comporte un arbitreur élémentaire de détermination de priorité individuelle et un arbitreur élémentaire de détermination de priorité de niveau, les entrées des arbitreurs élémentaires de priorité individuelle étant reliées, dans chaque niveau, aux conducteurs correspondants d'une liaison de demandes individuelles particulière au niveau considéré, les entrées des arbitreurs élémentaires de détermination de priorité de niveau de toutes les unités d'arbitration étant reliées aux conducteurs correspondants d'une liaison commune de demandes de priorité de niveau, les entrées des deux arbitreurs élémentaires de chaque unité d'arbitration étant également reliées à la sortie d'un dispositif de signalisation de demande de priorité de l'unité de traitement correspondante, et selon une première caractéristique de l'invention, dans chaque unité d'arbitration, les sorties des deux arbitreurs élémentaires sont reliées à une série d'entrées d'un comparateur dont l'autre série d'entrées est reliée à la sortie d'un circuit d'identification de l'unité de traitement et de son unité d'arbitration considérées, la sortie du comparateur étant reliée, par l'intermédiaire d'une bascule bistable, à l'entrée d'autorisation d'utilisation de bus de l'unité de traitement correspondante, les deux arbitreurs élémentaires fournissant, lorsqu'ils ont déterminé que l'unité de traitement correspondante peut utiliser le bus, la même identité que celle fournie par ledit circuit d'identification correspondant.

Selon un mode de réalisation particulier de l'invention, ledit circuit d'identification comporte un circuit de codage, de préférence à codage binaire, fournissant un code de niveau correspondant au niveau dans lequel est disposée l'unité de traitement avec laquelle coopère l'unité d'arbitration considérée, et fournissant un code de rang correspondant au rang de cette unité de traitement dans son niveau, ce circuit d'identification étant relié audit dispositif de signalisation de demande de priorité.

Selon encore un autre mode de réalisation particulier de l'invention, ledit dispositif de signalisation comporte une mémoire morte de transcodage dont une entrée d'adressage est reliée à la sortie de demande d'utilisation de bus de l'unité de traitement correspondante, et dont les autres entrées d'adressage sont reliées audit circuit d'identification, les sorties, de préférence du type à collecteur ouvert, de cette mémoire, et dont le nombre est égal à la somme du nombre de niveaux et du nombre d'unités de traitement par niveau, étant reliées aux entrées correspondantes de l'arbitreur élémentaire de niveau et de l'arbitreur élémentaire individuel respectivement.

La présente invention sera mieux comprise à la lecture de la description détaillée d'un mode de réalisation pris comme exemple non limitatif et illustré par le dessin annexé, sur lequel:

— la figure 1 est un bloc-diagramme d'un dispositif d'arbitration décentralisée conforme à la présente invention, et
— la figure 2 est un schéma détaillé d'une unité d'arbitration du dispositif de la figure 1.

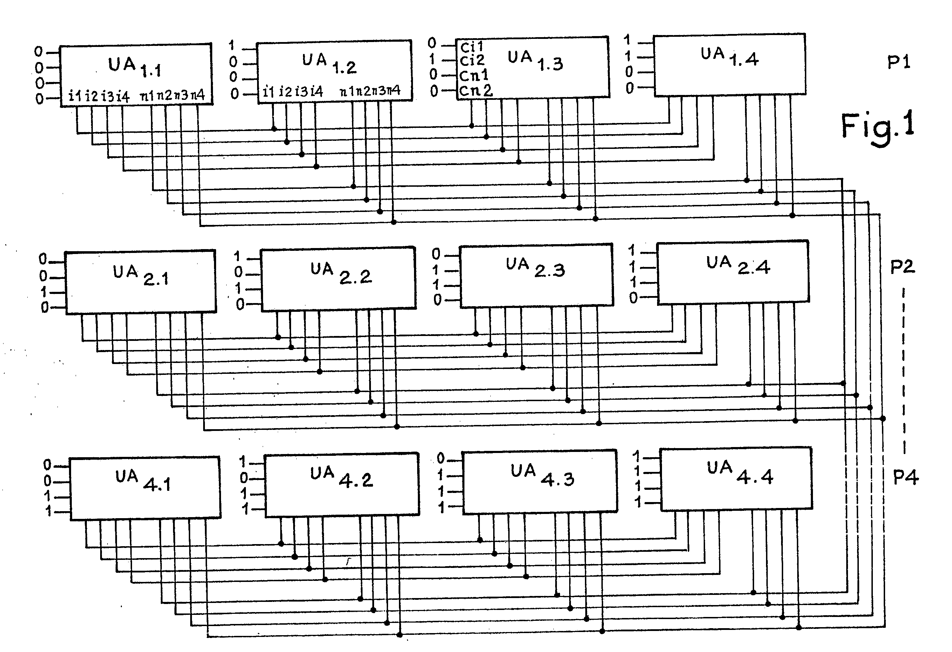

On a représenté sur la figure 1 le bloc-diagramme d'un dispositif d'arbitration pour un système multiprocesseur à seize unités de traitement. Toutefois, il est bien entendu que l'invention s'applique à un système multiprocesseur comportant un nombre quelconque d'unités de traitement. Ces seize unités de traitement sont arbitrairement réparties en $p$ groupes ou niveaux comportant chacun $n$ unités de traitement. Dans le cas présent p.n=16, c'est-à-dire un carré parfait, et on choisit de préférence p=n=4. Dans les cas où ce nombre p.n n'est pas un carré parfait, on choisit de préférence $p$ le plus voisin possible de $n$, $p$ pouvant être supérieur ou inférieur à $n$.

Les p.n unités de traitement du système multiprocesseur auquel est appliqué le dispositif de l'invention sont raccordées à un bus commun de communication de données (non représenté). Toutefois, il est bien entendu que l'invention n'est pas limitée à l'application à un système multiprocesseur mais peut s'appliquer à tout système dans lequel il faut arbitrer entre plusieurs sous-ensembles utilisant une voie de communication commune et susceptibles de demander simultanément l'utilisation de cette voie.

Pour ne pas surcharger le dessin, on n'a pas représenté les unités de traitement, mais uniquement les unités d'arbitration affectées à chacune de ces unités de traitement. Chacune de ces unités d'arbitration étant de très faible encombrement, commen on le verra ci-dessous, elle peut être facilement disposée sur la carte de circuit imprimé de l'unité de traitement correspondante.

Les p.n unités d'arbitration schématiquement et partiellement représentées sur la figure 1, correspondant respectivement aus p.n unités de traitement, sont référencées $UA_{1.1}$ à $UA_{1.4}$ pour celles relatives aux unités de traitement du premier niveau P1, $UA_{2.1}$ à $UA_{2.4}$ pour le second niveau P2, $UA_{3.1}$ à $UA_{3.4}$ pour le troisième niveau P3, et $U4_{4.1}$ à $U4_4$ pour le quatrième niveau P4.

Chaque unité d'arbitration comporte, pour la connexion extérieure, une série de quatre bornes de signalisation de demande de priorité individuelle référencées i1 à i4. Dans chaque niveau séparément, les ·bornes $i$ de même référence sont reliées entre elles. Ainsi, par exemple, dans le niveau P1, les quatre bornes i4 des unités d'arbitration $UA_{1.1}$ à $UA_{1.4}$ sont reliées entre elles, les quatre bornes i2 sont reliées entre elles, etc.

Chaque unité d'arbitration comporte également pour la connexion extérieure, quatre bornes de signalisation de demande de priorité de niveau référencées n1 à n4. Pour l'ensemble des unités d'arbitration, les bornes $n$ de même référence sont toutes reliées ensemble. Ainsi, par exemple, les bornes n1 des seize unités d'arbitration sont toutes reliées ensemble.

En outre, chaque unité d'arbitration comporte une série de bornes d'identification. De préférence, l'identité de l'unité d'arbitration est fournie par un circuit de codage qui est avantageusement extérieur à la carte de circuit imprimé supportant l'unité d'arbitration et, le cas échéant l'unité de traitement correspondante, ce qui permet de standardiser ces cartes, seuls les supports ou connecteurs de ces cartes étant individualisés, ainsi qu'il apparaîtra plus clairement ci-dessous. Etant donné qu'il y a dans le dispositif d'arbitration, quatre niveaux et que chaque niveau comporte quatre unités d'arbitration, il suffit, pour un codage qui est de préférence en code binaire, de deux éléments binaires pour coder les différents niveaux, et de deux éléments binaires pour coder chaque unité d'arbitration à l'intérieur de son niveau. Par conséquent, chaque unité d'arbitration comporte deux bornes d'identification par codage individuel (codage à l'intérieur d'un niveau), respectivement référencées ci1, ci2, et deux bornes d'identification par codage de niveau, respectivement référencées cn.1, cn.2.

Il est bien entendu que· si le système multiprocesseur comportait un nombre différent d'unités de traitement, et si le nombre de niveaux et/ou d'unités par niveau était différent, le nombre de bornes de codage serait, le cas échéant, modifié en conséquence.

Dans l'exemple de réalisation représenté sur la figure 1, on a codé les niveaux P1 à P4 "00", "01", "10" et "11" respectivement, les bornes cn1 et cn2 étant respectivement affectées aux éléments binaires de poids 0 et 1. A l'intérieur de chaque niveau, les unités d'arbitration sont codées "00", "01", "10" et "11" dans l'ordre de leurs références, c'est-à-dire, par exemple pour le niveau P1, de $UA_{1.1}$ à $UA_{1.4}$ respectivement. Pour simplifier le dessin, on n'a pas représenté sur la figure 1 les différents circuits de codage, mais simplement les valeurs des niveaux logiques "0" et "1" correspondant au codage des entrées ci et cn des unités d'arbitration des niveaux P1, P2 et P4, seuls représentés. Ces circuits de codage sont des circuits fournissant les niveaux logiques "1" et "0" aux bornes de codage correspondantes. Etant donné que leur réalisation est évidente pour l'homme de l'art, ils ne seront pas décrits plus en détail.

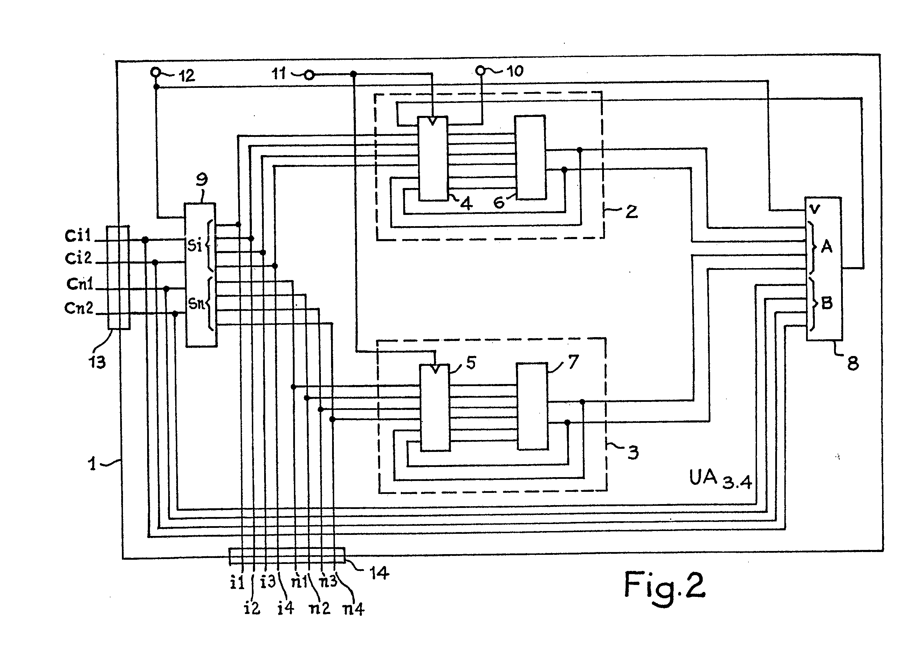

On a représenté sur la figure 2 le schéma détaillé du mode de réalisation préféré d'une unité d'arbitration $UA_{p.n}$ conforme à l'invention, toutes les unités d'arbitration du dispositif d'arbitration de la figure 1 étant alors réalisées identiquement à celle de la figure 2.

L'unité d'arbitration $UA_{p.n}$, par exemple $UA_{3.4}$ représenté sur la figure 2 est réalisée en circuits intégrés disposés sur une carte 1 de circuit imprimé qui est avantageusement la carte supportant les éléments de l'unité de traitement correspondante. L'unité d'arbitration $UA_{p.n}$ comporte un arbitreur élémentaire individuel 2 et un arbitreur élémentaire de niveau 3. Les arbitreurs élémentaires 2 et 3 sont réalisés de façon connue en soi d'après le susdit article de "Computer Design", et comprennent chacun un registre à bascules bistables de type D référencé 4, 5 respectivement, et une mémoire morte référencée 6, 7 respectivement.

Le registre 4 de l'arbitreur élémentaire 2 comporte sept cellules dont six servent à l'arbitrage proprement dit, la septième cellule servant simplement à transférer, de la façon expliquée ci-dessous, l'autorisation d'utilisation de bus fournie par l'unité d'arbitration, à l'unité de traitement correspondante, en synchronisme avec un front actif du signal d'horloge envoyé aux arbitreurs élémentaires. Cependant, il n'est pas absolument nécessaire d'utiliser une cellule du registre 4 pour transférer cette autorisation, et on pourrait tout aussi bien utiliser une bascule bistable séparée recevant le même signal d'horloge que les registres 4 et 5. Une entrée du registre 4, correspondant à ladite septième cellule est reliée à la sortie d'un comparateur 8. Quatre autres entrées du registre 4 sont reliées d'une par à une première série Si de sorties d'une mémoire morte 9 de transcodage du type à sorties à collecteur ouvert, et d'autre part aux bornes i1 à i4 respectivement. Deux autres entrées du registre 4 sont reliées aux deux sorties de la mémoire morte 6. La sortie de ladite septième cellule du registre 4 est reliée à une borne 10 qui est elle-même reliée, de façon non représentée, à l'entrée d'autorisation d'utilisation de bus de l'unité de traitement correspondante. Les six autres sorties du registre 4 sont respectivement reliées aux six entrées d'adressage de la mémoire 6.

Le registre 5 de l'arbitreur élémentaire 3 comporte six cellules. Ses quatre premières entrées sont reliées d'une part à une seconde série Sn de sorties de la mémoire 9, et d'autre part aux bornes n1 à n4. Les deux autres entrées du registre 5 sont reliées aux deux sorties de la mémoire morte 7. Les entrées de signaux d'horloge des registres 4 et 5 sont reliées ensemble à une borne 11 qui est elle-même reliée à un générateur de signaux d'horloge approprié (non représenté).

La mémoire morte 9 comporte cinq entrées d'adressage dont quatre sont reliées aux bornes ci1, ci2, cn1, cn2 respectivement. La cinquième entrée d'adressage de la mémoire 9 est reliée à une borne 12, qui est ellemême reliée, de façon non représentée, à la sortie de demande d'utilisation de bus de l'unité de traitement correspondante.

L'entrée v de validation du comparateur 8 est reliée à la borne 12. Le comparateur 8 comporte deux séries A, B de quatre entrées chacune. Deux des quatre entrées de la série A sont reliées aux deux sorties de la mémoire 6, et les deux autres entrées de la série A sont reliées aux deux sorties de la mémoire 7. Les quatre entrées de la série B sont reliées aux bornes ci1, ci2, cn1 et cn2 respectivement.

Dans un but de standardisation des cartes supportant les unités d'arbitration, afin d'assurer leur parfaite interchangeabilité, les bornes ci1, ci2, cn1 et cn2 sont réalisées en fait sous forme de broches d'un connecteur 13 solidaire de la carte 1. De même, les bornes i1 à i4 et n1 à n4 sont réalisées sous forme de broches d'un connecteur solidaire de la carte 1. Pour simplifier encore la réalisation, on peut réunir les connecteurs 13 et 14 en un connecteur unique ou même les réunir au connecteur de l'unité de traitement si celle-ci est disposée sur la carte 1.

Nous allons maintenant expliquer le fonctionnement du dispositif décrit ci-dessus, en détaillant la programmation des mémoires mortes utilisées.

La mémoire morte 9 est une mémoire de transcodage. Elle est programmée de façon que chacune des quatre sorties de la série Si et de la série Sn soit activée lorsque le code binaire correspondant est appliqué sur les bornes ci1, ci2 et cn1, cn2 respectivement. Ainsi, les codes "00", "01", "10" et "11" appliqués sur ci1 et ci2 activent les sorties de la série Si reliées aux bornes i1 à i4 respectivement. De même, les codes "00", "01", "10" et "11" appliqués sur cn1 et cn2 activent les sorties de la série Sn reliées aux bornes n1 à n4 respectivement. De cette façon, chaque arbitreur élémentaire tel que l'arbitreur 2 connaît le rang de l'unité de traitement correspondante au sein de son niveau, et chaque arbitreur élémentaire tel que 3 connaît le niveau dans lequel est disposée cette unité de traitement. Par conséquent, l'unité d'arbitration connaît l'identité de l'unité de traitement correspondante au sein du système multiprocesseur.

Le mémoires 6 et 7 de chaque unité d'arbitration sont programmées de façon analogue à celle indiquée dans le susdit article de "Computer Design". Toutefois, à la différence du procédé connu, et comme expliqué plus en détail ci-dessous, conformément à la présente invention, l'attribution des priorités est effectuée d'abord selon un cycle principal au cours duquel la priorité est distribuée suivant un ordre déterminé, de préférence une seule fois au cours d'un cycle, à chacun des niveaux en faisant la demande, et ensuite selon des cycles secondaires pour chacun des niveaux, la priorité étant distribuée selon un ordre déterminé, pour chaque niveau, de préférence une seule fois au cours d'un cycle, à chacune des unités de traitement du même niveau qui en fait la demande. Le cycle principal est effectué simultanément par tous les arbitreurs élémentaires 3, tandis que les différents cycles secondaires sont effectués chacun par tous les arbitreurs 2 du niveau correspondant. Dans le cas présent, il y a quatre cycles secondaires qui sont effectués indépendamment les uns des autres.

La détermination des états présent et futur de chacun des arbitreurs élémentaires se fait de la façon la plus simple: on n'envisage que deux états, à savoir maître du bus ou non. On pourrait envisager d'autres états tels que "au repos", "en réserve" (maître du bus au cours du cycle subséquent) ou "en attente" (maître du bus après celui qui est actuellement "en réserve"), mais cela compliquerait d'autant la programmation des mémoires, et le gain de temps ainsi réalisé dans la détermination de l'ordre des priorités ne serait pas toujours suffisamment mis à profit.

Les sorties (prises dans l'ordre, à savoir de haut en bas dans le cas représenté sur le dessin), des mémoires 6 et 7 sont codées suivant le même code que celui utilisé pour coder les bornes $ci1$, $ci2$ et $cn1$, $cn2$ respectivement. Ainsi, par exemple dans le cas de l'unité d'arbitration $UA_{3.4}$, le code appliqué sur les bornes $ci1$, $ci2$ est "11" (n=4) et celui appliqué sur les bornes $cn1$, $cn2$ est "10" (p=3). Par conséquent, lorsque l'arbitreur élémentaire 3 de l'unité $UA_{3.4}$ détermine sur un premier front actif du signal d'horloge appliqué sur la borne 11, que la priorité revient au niveau 3, le signal binaire présent sur les sorties de la mémoire 7 de l'unité $UA_{3.4}$ en particulier est "10" (ce signal est d'ailleurs présent sur les sorties des mémoires 7 de toutes les unités d'arbitration). Lorsque l'arbitreur élémentaire 2 de l'unité $UA_{3.4}$ détermine sur ledit premier front actif du signal d'horloge, que, dans le niveau 3, la priorité revient à cette quatrième unité $UA_{3.4}$; le signal binaire présent sur les sorties de la mémoire 6 de cette unité en particulier (ainsi que sur les sorties des mémoires 6 des autres unités du niveau 3) est "11". Lorsque les deux signaux binaires précités sont simultanément présents aux sorties des mémoires 7 et 6 respectivement, la configuration du signal sur les quatre entrées de la série A du comparateur 8 est identique à la configuration du signal sur les quatre entrées de la série B du comparateur 8 qui sont reliées aux bornes $ci1$, $ci2$, $cn1$ et $cn2$ et reçoivent donc le code correspondant à l'unité d'arbitration $UA_{3.4}$.

Si à un moment donné, l'unité de traitement correspondante $UT_{3.4}$ réclame l'utilisation du bus et émet sur la borne 12 un signal de demande d'utilisation de bus, par exemple un signal logique "1", ce signal est appliqué d'une part à l'entrée de la mémoire 9 qui le transmet aux bornes $i4$ et $n3$ pour en informer toutes les unités d'arbitration et modifier en conséquence l'adressage de leurs mémoires respectives sur un front actif consécutif du signal d'horloge, et d'autre part à l'entrée de validation $v$ du comparateur 8. Le comparateur 8, chargé de comparer les signaux présents sur les entrées A et B, émet alors un signal, par exemple un niveau logique "1", en cas d'égalité lorsqu'un second front actif du signal d'horloge est appliqué sur la borne 11, ladite septième cellule du registre 4 fait apparaître sur la borne 10 un signal d'autorisation d'utilisation de bus, et simultanément ce second front actif entraîne la modification de l'adressage des mémoires des unités d'arbitration. En effet, l'unité $UT_{3.4}$ vient d'obtenir la priorité et, par hypothèse, ne peut plus l'obtenir si d'autres unités réclament l'utilisation du bus, pendant le cycle complet en cours, après avoir effectué une opération élémentaire (par exemple écriture d'un mot transmis par le bus dans sa mémoire ou lecture d'un mot mémorisé à une adresse déterminée de sa mémoire et envoyé sur le bus pendant l'intervalle de temps séparant deux fronts actifs consécutifs du signal d'horloge). Par conséquent, en particulier dans l'unité $UA_{3.4}$ ledit second front actif du signal d'horloge fait transférer par les registres 4 et 5, aux entrées des mémoires 6 et 7 respectivement, une configuration d'adressage telle que la configuration des signaux de sorties de ces mémoires, configuration appliquée à la série d'entrées A du comparateur 8, est différente de la configuration du code de l'unité $UA_{3.4}$ en question, configuration appliquée à la série d'entrées B de ce comparateur. Il y a donc un "0" à la sortie du comparateur 8 de cette unité, et lorsqu'un troisième front actif est appliqué sur la borne 11, un "0" apparaît sur la borne 10 et empêche l'unité $UT_{3.4}$ d'entamer une autre opération élémentaire si elle réclame encore l'utilisation du bus. En outre, ledit second front actif modifie l'adressage des mémoires des autres unités d'arbitration, et dans l'une d'entre celles qui réclament la priorité, à savoir celle qui suit, dans l'ordre du cycle complet, l'unité venant d'avoir eu la priorité, il y a égalité entre les configurations appliquées sur les entrées A et B du comparateur 8, et c'est cette dernière unité qui reçoit la priorité audit troisième front actif du signal d'horloge, et permet à son unité de traitement d'utiliser le bus pour effectuer une opération élémentaire.

Bien entendu, si pendant un laps de temps une seule unité de traitement réclame l'utilisation du bus, la priorité lui est attribuée tant qu'elle émet un "1" sur la borne 12 et tant qu'aucune autre unité de traitement ne réclame l'utilisation du bus.

On remarquera qu'un cycle complet d'attribution de priorités, c'est-à-dire un cycle au cours duquel toutes les unités de traitement ayant réclamé l'utilisation du bus reçoivent la priorité une seule fois, comporte au maximum (dans le cas où les seize unités de traitement réclament toutes l'utilisation du bus) quatre cycles principaux au cours de chacun desquels chaque niveau reçoit la priorité une fois. Un cycle secondaire de chaque niveau est dont accompli au bout de quatre cycles principaux. Bien entendu, si dans un ou plusieurs niveaux aucune demande d'utilisation du bus n'est démise, les cycles principaux sont réduits en conséquence, et si dans un niveau donné certaines unités ne réclament pas l'utilisation du bus, le cycle secondaire correspondant est réduit en conséquence.

A la lecture des explications ci-dessus, et connaissant l'article précité de "Computer Design", l'homme de l'art peuo programmer très facilement les mémoires telles que les mémoires 6 et 7.

Dans le cas du mode de réalisation préféré de la figure 2, toutes les unités d'arbitration $UA_{1.1}$ à $UA_{p.n}$ sont identiques à l'unité $UA_{3.4}$ et toutes leurs mémoires sont programmées exactement comme les mémoires 6 et 7 respectivement. Seules les connexions extérieures aux cartes de circuit imprimé comportant les composants des circuits individuels sont réalisées de façon spécifique à chaque unité de traitement. Par conséquent, les cartes de circuit imprimé comportant les unités d'arbitration et, le cas échéant, les unités de traitement correspondantes, sont toutes interchangeables, ce qui facilite la maintenance de système multiprocesseur conforme à l'invention.

La répartition des unités de traitement en plusieurs niveaux ou même sous-niveaux permet d'avoir des circuits individuels d'arbitration relativement simples et faciles à réaliser, même lorsque le nombre d'unités de traitement du système multiprocesseur est très élevé. Les mémoires mortes telles que les mémoires 6 et 7 sont très faciles à programmer du fait de leur relativement faible capacité: dans le cas, qui peut être considéré comme très complexe, d'un système multiprocesseur à seize unités de traitement, les mémoires 6 et 7 sont identiques et sont du type à 64×2 éléments binaires ou d'un type très courant de capacité supérieure, par exemple 256×4.

Dans le cadre de l'invention, il est également possible de modifier à tout moment l'ordre des priorités par exemple en remplaçant l'une ou plusieurs des mémoires mortes des circuits individuels d'arbitration par d'autres mémoires programmées différemment. Ces autres mémoires peuvent être commutées par tout dispositif approprié commandé manuellement ou par le système multiprocesseur lui-même. Il est également possible d'utiliser des mémoires vives au lieu de mémoires mortes, le contenu de ces mémoires vives étant modifié par des moyens appropriés connus.

D'autre part, les niveau peuvent être subdivisés en sous-niveaux, l'arbitreur élémentaire 3 devenant l'arbitreur de sous-niveaux, et un arbitreur élémentaire supplémentaire étant disposé dans chaque unité d'arbitration, le branchement de cet arbitreur supplémentaire étant similaire à celui de l'arbitreur 3, les sorties de cet arbitreur supplémentaire étant reliées à une troisième série d'entrées du comparateur prévu en conséquence.

**Revendications**

1. Dispositif d'arbitration décentralisée de plusieurs unités de traitement d'un système multiprocesseur comprenant p.n unités de traitement toutes reliées à un bus commun et réparties en $p$ niveaux comprenant chacun $n$ unités de traitement associées chacune à une unité d'arbitration, dans lequel chaque unité d'arbitration ($UA_{p.n}$) comporte un arbitreur élémentaire de détermination de priorité individuelle (2) et un arbitreur élémentaire de détermination de priorité de niveau (3), les entrées des arbitreurs élémentaires de priorité individuelles étant reliées, dans chaque niveau (P1 à P4), aux conducteurs correspondants (i1 à i4) d'une liaison de demandes individuelles particulière au niveau considéré, les entrées des arbitreurs élémentaires de détermination de priorité de niveau de toutes les unités d'arbitration étant reliées aux conducteurs correspondants (n1 à n4) d'une liaison commune de demandes de priorité de niveau, les entrées des deux arbitreurs élémentaires de chaque unité d'arbitration étant également reliées à la sortie d'un dispositif (9) de signalisation de demande de priorité de l'unité de traitement correspondante, caractérisé par le fait que dans chaque unité d'arbitration les sorties des deux arbitreurs élémentaires sont reliées à une série d'entrées (A) d'un comparateur (8) dont l'autre série d'entrées (B) est reliée à la sortie d'un circuit d'identification (13) de l'unité de traitement et de son unité d'arbitration considérées, la sortie du comparateur étant reliée, par l'intermédiaire d'une bascule bistable à l'entrée (10) d'autorisation d'utilisation de bus de l'unité de traitement correspondante, les deux arbitreurs élémentaires fournissant, lorsqu'ils ont déterminé que l'unité de traitement correspondante peut utiliser le bus, la même identité que celle fournie par ledit circuit d'identification correspondant.

2. Dispositif d'arbitration décentralisée selon la revendication 1, caractérisé par le fait que ledit circuit d'identification comporte un circuit de codage, de préférence à codage binaire, fournissant un code de niveau (cn1, cn2) correspondant au niveau dans lequel est disposée l'unité de traitement avec laquelle coopère l'unité d'arbitration considérée, et fournissant un code de rang (ci1, ci2) correspondant au rang de cette unité de traitement dans son niveau, ce circuit d'identification étant relié audit dispositif de signalisation de demande de priorité.

3. Dispositif d'arbitration décentralisée selon la revendication 2, caractérisé par le fait que ledit dispositif de signalisation comporte une mémoire morte de transcodage (9) dont une entrée d'adressage est reliée à la sortie (12) de demande d'utilisation de bus de l'unité de traitement correspondante, et dont les autres entrées d'adressage sont reliées audit circuit d'identification, les sorties, de préférence du type à collecteur ouvert, de cette mémoire, et dont le nombre est égal à la somme du nombre de niveaux et du nombre d'unités de traitement par niveau, étant reliées aux entrées correspondantes de l'arbitreur élémentaire de niveau et de l'arbitreur élémentaire individuel, respectivement.

**Patentansprüche**

1. Vorrichtung zur dezentralen Arbitrierung zwischen mehreren Verarbeitungseinheiten eines Multiprozessorsystems, mit mehreren je einer Arbitriereinheit zugeordneten Verarbeitungseinheiten, die alle an eine gemeinsame Schiene angeschlossen sind und in p Ebenen zu je n Verarbeitungseinheiten aufgeteilt sind, wobei jede Arbitriereinheit (UA$_{p.n}$) einen elementaren Arbitrierer (2) zur Bestimmung der Individualpriorität und einen elementaren Arbitrierer (3) zur Bestimmung der Ebenenpriorität besitzt, wobei die Eingänge der Elementararbitrierer für die Bestimmung der Individualpriorität in jeder Ebene (P1 bis P4) an die entsprechenden Leiter (i1 bis i4) einer für die betrachtete Ebene besonderen Verbindung für Individualanforderungen angeschlossen sind, wobei die Eingänge der Elementararbitrierer für die EbenenPrioritätsbestimmung aller Arbitriereinheiten an die entsprechenden Leiter (n1 bis n4) einer gemeinsamen Verbindung für die Ebenenprioritätsanforderungen angeschlossen sind, une wobei die Eingänge der beiden Elementararbitrierer jeder Arbitriereinheit auch an den Ausgang einer Vorrichtung (9) zur Meldung einer Prioritätsanforderung von der entsprechenden Verarbeitungseinheit angeschlossen sind, dadurch gekennzeichnet, daß in jeder Arbitriereinheit die Ausgänge der beiden Elementararbitrierer mit einer Reihe von Eingängen (A) eines Komparators (8) verbunden sind, deren andere Reihe von Eingängen (B) an den Ausgang eines Schaltkreises (13) zur Identifizierung der betrachteten Verarbeitungseinheit und ihrer Arbitriereinheit angeschlossen ist, während der Ausgang des Komparators über eine bistabile Kippstufe an den Autorisationseingang (10) für die Benutzung der Schiene durch die entsprechende Verarbeitungseinheit angeschlossen ist, wobei die beiden Elementararbitrierer dann, wenn sie bestimmt haben, daß die entsprechende Verarbeitungseinheit die Schiene benutzen kann, dieselbe Identität liefern wie der entsprechende Identifikationsschaltkreis.

2. Vorrichtung zur dezentralen Arbitrierung nach Anspruch 1, dadurch gekennzeichnet, daß der Identifikationsschaltkreis einen Kodierschaltkreis, vorzugsweise mit Binärkodierung, aufweist, der einen Ebenen-Kode (cn1, cn2) entsprechend der Ebene, in der sich eine Verarbeitungseinheit, mit der die betrachtete Arbitriereinheit zusammenarbeitet, befindet, und der weiter einen Rangkode (ci1, ci2) liefert entsprechend dem Rang dieser Verarbeitungseinheit in ihrer Ebene, und daß der Identifikationsschaltkreis an die Vorrichtung zur Meldung einer Prioritätsanforderung angeschlossen ist.

3. Vorrichtung zur dezentralen Arbitrierung nach Anspruch 2, dadurch gekennzeichnet, daß die Vorrichtung zur Meldung einer Prioritätsanforderung einen Festwertspeicher (9) zur Transkodierung aufweist, von dem ein Adresseneingang an den Ausgang (12) für die Anforderung der Schiene durch die entsprechende Verarbeitungseinheit und dessen andere Adresseneingänge an den Identifikationsschaltkreis angeschlossen sind, und daß die Ausgänge dieses Speichers, die vorzugsweise vom offenen Kollektortyp sind und deren Zahl gleich der Summe der Anzahl der Ebenen und der Anzahl der Verarbeitungseinheiten pro Ebene ist, mit den entsprechenden Eingängen des Elementararbitrierers bzw. des IndividualElementararbitrierers verbunden sind.

## Claims

1. A device for the decentralized arbitration between a plurality of processing units in a multiprocessor system, comprising p.n processor units which are all connected to a common bus and which are arranged in p levels each including n processor units which are each associated to one arbitration unit, each arbitration unit (UA$_{p.n}$) comprising an elementary arbiter (2) for determining the individual priority and an elementary arbiter (3) for determining the level priority, the inputs of the individual elementary priority arbiters being connected in each level (P1 to P4) to the corresponding conductors (i1 to i4) of an individual request link which is particular to the considered level, the inputs of the elementary arbiters for determining level priority of all the arbitration units being connected to the corresponding conductors (n1 to n4) of a common level priority request link, the inputs of the two elementary arbiters of each arbitration unit being also connected to the output of a device (9) for signalling the priority request of the corresponding process unit, characterized in that, in each arbitration unit, the outputs of the two elementary arbiters are connected to a group of inputs (A) of a comparator (8), the other group of inputs (B) of this comparator being connected to the output of an identification circuit (13) of the respective processor unit and its arbitration unit, the output of the comparator being connected via a flip-flop to the bus access authorization input (10) of the corresponding processor unit, the two elementary arbiters furnishing the same identity as that which is furnished by said corresponding identification circuit as soon as the elementary arbiters have determined that the corresponding processor unit is authorized to use the bus.

2. A device for the decentralized arbitration according to claim 1, characterized in that said identification circuit comprises a coder circuit, preferably a binary coder circuit, furnishing a level code (cn1, cn2) corresponding to the level in which is disposed the processor unit cooperating with the considered arbitration unit, and furnishing a rank code (ci1, ci2) corresponding to the rank of said processor unit within its level, this identification circuit being connected to said priority request signalisation device.

3. A device for the decentralized arbitration according to claim 2, characterized in that said signalisation device comprises a ROM for transcoding purposes (9), one addressing input of which is connected to the output (12) for the bus access request of the corresponding processor unit, whereas the other address inputs are connected to said identification circuit, the outputs of said memory, preferably of the open collector type and having a number which is equal to the sum of the number of levels and of the number of processor units in each level, being connected to the corresponding inputs of the elementary level arbiter and of the elementary individual arbiter respectively.

Fig.1

Fig.2

0 052 035